# EUROPÄISCHE PATENTSCHRIFT

(11) **EP 1 799 862 B1**
(45) Veröffentlichungstag und Bekanntmachung des Hinweises auf die Patenterteilung: **17.04.2013**
(21) Anmeldenummer: 05801395.4
(22) Anmeldetag: 14.10.2005
(51) Int. Cl.: C12Q 1/68, G01N 33/543, B01L 3/00

(54) **VERFAHREN ZUR KOMBINIERTEN ISOLIERUNG VON MAGNET-BEADS AUS EINER FLÜSSIGEN PROBE UND ANSCHLIESSENDER THERMOZYKLISIERUNG FÜR DIE PCR UND ZUGEHÖRIGE ANORDNUNG**
METHOD FOR THE COMBINED ISOLATION OF MAGNET-BEADS FROM A LIQUID SAMPLE AND SUBSEQUENT THERMOCYCLISATION FOR THE POLYMERASE CHAIN REACTION (PCR) AND ASSOCIATED ARRANGEMENT
PROCEDE COMBINE DE SEPARATION DE BILLES MAGNETIQUES CONTENUES DANS UN ECHANTILLON LIQUIDE PUIS DE THERMOCYCLISATION A DES FINS DE REACTION EN CHAINE DE LA POLYMERASE (PCR), ET DISPOSITIF CORRESPONDANT

(30) Priorität: 15.10.2004 DE 102004050575
(43) Veröffentlichungstag der Anmeldung: 27.06.2007
(73) Patentinhaber: Siemens Aktiengesellschaft, 80333 München (DE)
(72) Erfinder: GUMBRECHT, Walter, 91074 Herzogenaurach (DE); PAULICKA, Peter, 91056 Erlangen (DE); STANZEL, Manfred, 91056 Erlangen (DE)
(86) Internationale Anmeldenummer: PCT/EP2005/055272
(87) Internationale Veröffentlichungsnummer: WO 2006/042826

(56) Entgegenhaltungen:
- WO-A1-2005/105284
- WO-A1-2005/106024
- US-A1- 2004 018 611
- WATERS L C ET AL: "MULTIPLE SAMPLE PCR AMPLIFICATION AND ELECTROPHORETIC ANALYSIS ON A MICROCHIP" ANALYTICAL CHEMISTRY, AMERICAN CHEMICAL SOCIETY. COLUMBUS, US, Bd. 70, Nr. 24, 15. Dezember 1998 (1998-12-15), Seiten 5172-5176, XP000799221 ISSN: 0003-2700
- LOGALLY E T ET AL: "FULLY INTEGRATED PCR-CAPILLARY ELECTROPHORESIS MICROSYSTEM FOR DNA ANALYSIS" LAB ON A CHIP, ROYAL SOCIETY OF CHEMISTRY, CAMBRIDGE, GB, Bd. 1, Nr. 2, Dezember 2001 (2001-12), Seiten 102-107, XP008038356 ISSN: 1473-0197
- FELLMANN F ET AL: "SIMPLIFIED PROTOCOL OF SOLID-PHASE CDNA LIBRARIES FOR MULTIPLE PCR AMPLIFICATION" BIOTECHNIQUES, INFORMA LIFE SCIENCES PUBLISHING, WESTBOROUGH, MA, US, Bd. 21, Nr. 5, November 1996 (1996-11), Seite 766,768,770, XP001135191 ISSN: 0736-6205
- CHOI JIN-WOO ET AL: "An integrated microfluidic biochemical detection system for protein analysis with magnetic bead-based sampling capabilities." LAB ON A CHIP. FEB 2002, Bd. 2, Nr. 1, Februar 2002 (2002-02), Seiten 27-30, XP002362398 ISSN: 1473-0197

## Beschreibung

Die Erfindung bezieht sich auf ein Verfahren zur kombinierten Isolierung von Magnet-Beads aus einer flüssigen Probe und anschließender Thermozyklisierung für die PCR. Daneben bezieht sich die Erfindung auch auf die zugehörige Anordnung zur Durchführung des Verfahrens.

Zur Nukleinsäureanalytik z.B. von weißen Blutzellen aus Vollblut zur Beantwortung von z.B. humangenomischen Fragestellungen müssen zunächst in einem Probenvorbereitungsschritt die Zellen aufgebrochen und anschließend die dabei freigesetzte DNA isoliert werden. Dabei müssen Blutbestandteile, wie z.B. Hämoglobin, Immunglobuline und Laktoferrin, die eine nachfolgende PCR inhibieren könnten, entfernt werden.

Im Labor werden diese Arbeitsschritte nach bekanntem Stand der Technik durchgeführt. So können neben anderen Verfahren Zellen mit alkalischer Lösung (NaOH) aufgebrochen und anschließend die DNA an mit Silica beschichteten Magnet-Beads gebunden werden. Durch Anlegen eines Magnetfeldes werden die mit DNA beladenen Magnet-Beads festgehalten und gewaschen. Die isolierte DNA kann anschließend von den Beads eluiert werden oder zusammen mit den Beads (als DNA-/Bead-Komplex) für die PCR eingesetzt werden.

In der nicht vorveröffentlichten DE 10 2004 021822 A1 wird die kombinierte Realisierung einer Magnet-Bead-Isolierung und einer PCR-Reaktion in einer integrierten miniaturisierten Cartridge beschrieben. Dabei wird das Hauptaugenmerk auf die Anordnung in der Cartridge gelegt. Es ist dort nicht offen gelegt, wie das Steuer- und Aktuator-Gerät aufgebaut sein muss, um eine kombinierte Mikrofluidik, Bead-Isolierung und Thermozyklisierung zu realisieren.

Aus der WO 2005/106024 A1 ist ein Verfahren und eine Anordnung zur DNA-Isolierung mit Trockenreagenzien bekannt. Die Trockenreagenzien umfassen Magnet-Beads zur Isolierung und Vervielfältigung von DNA über PCR, wobei die Magnet-Beads sich mit Hilfe von Mitteln zum Generieren eines Magnetfeldes z.B. am Ausgang eines Mikrokanals fixieren lassen, und wobei sich diese Mittel vorzugsweise außerhalb der Cartridge befinden. Die Fixierung der Magnet-Beads erfolgt über einen relativ großen räumlichen Bereich in Form eines breit verschmierten, dicht gepackten Haufens an einer Wandung.

Davon ausgehend ist es Aufgabe der Erfindung, ein verbessertes Verfahren zur kombinierten Isolierung der Magnet-Beads mit geeigneten Möglichkeiten zur Thermozyklisierung vorzuschlagen. Daneben soll eine zugehörige Anordnung geschaffen werden. Das Verfahren und die Anordnung sollen eine verbesserte Isolierung der Magnet-Beads auf engstem Raum ermöglichen, ohne eine mögliche Thermozyklisierung zu stören.

Die Aufgabe ist erfindungsgemäß durch die Maßnahmen des Patentanspruches 1 gelöst. Eine zugehörige Anordnung ist im Patentanspruch 5 angegeben. Weiterbildungen des Verfahrens und der zugehörigen Anordnung sind Gegenstand der abhängigen Ansprüche.

Vom Stand der Technik sind zwar für sich gesehen sowohl die Magnet-Bead-Isolierung mittels eines Magnetfeld-Gradienten sowie die Thermozyklisierung mit z.B. Peltier-Elementen aus dem Stand der Technik bekannt. Mit der Erfindung wird aber erstmalig erreicht, dass die Realisierung einer Kombination beider Vorgänge auf engstem Raum stattfinden kann. Die Mittel zur schnellen Wärmeübertragung und die Mittel zur Applikation eines starken Magnetfeld-Gradienten werden am gleichen Ort realisiert und können insbesondere in einem Raum von etwa 10 mm³ stattfinden.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: das Prinzip der Erfindung in grob schematischer Darstellung,
- Figur 2: im Schnitt eine konkrete Anordnung mit Mitteln zur Konzentration von Magnet-Beads an einer eng lokalisierten Stelle und mit Mitteln zur Wärmeübertragung,
- Figur 3: eine solche Anordnung mit einer darin einschiebbaren Cartridge,
- Figur 4: die Cartridge in Draufsicht und
- Figur 5: eine Variante der Anordnung nach Figur 3 mit eingeschobener Cartridge und Mitteln zum Druckausgleich.

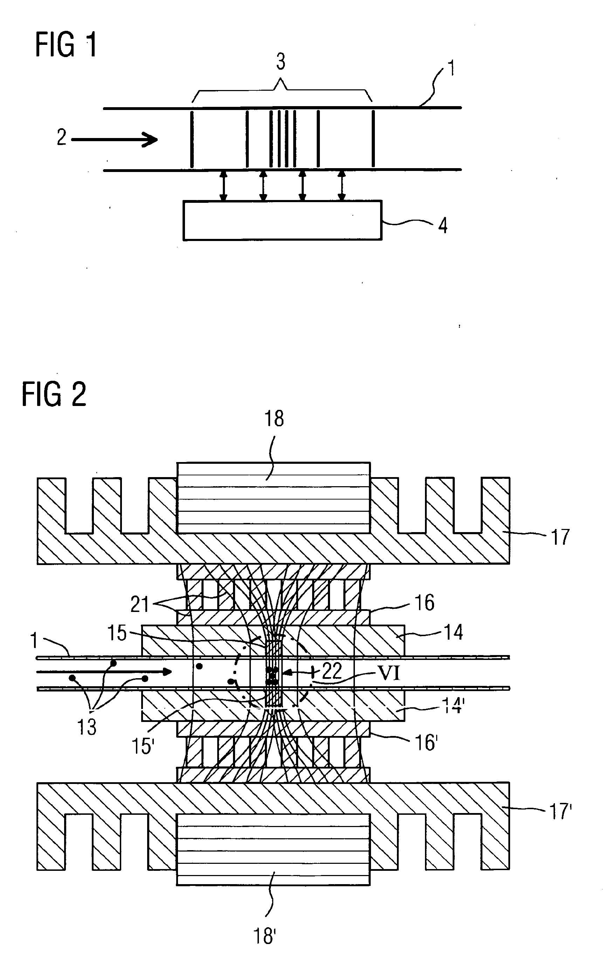

In Figur 1 ist ein Durchflusskanal 1 dargestellt, in dem ein Flüssigkeitsfluss 2 entlang des Richtungspfeils realisiert wird. Entlang der Fließrichtung wird ein Magnetfeldgradient 3 aufgebaut, wozu von einer Quelle Feldlinien mit unterschiedlicher Dichte verlaufen. Senkrecht zur Fließrichtung wird ein Wärmetransfer realisiert, wozu eine Einheit 4 vorhanden ist.

Um einen schnellen Wärmetransport für die Thermozyklisierung bei der PCR zu gewährleisten, ist die PCR-Kammer in einer geometrischen Dimension möglichst klein gehalten (ca. 1 mm bzw. Volumen < 20 µl) und die Wärmeübergänge werden in einer "Sandwich"-Thermostatisier-Anordnung so realisiert, dass lediglich geringe Flüssigkeitsschichten (einige 100 µm) ins thermische Gleichgewicht gebracht werden müssen. Die PCR-Kammer befindet sich vorzugsweise in einem Gehäuse mit planparallelen Außenflächen (Polymerplatte mit Aussparung und Folienverschluss). Parallel zur Polymerplatte bzw. Verschlussfolie verlaufen Zu- und Abfluss der PCR-Kammer. Als thermische Aktuatoren werden Peltierelemente eingesetzt, die über eine dünne, gut wärmeleitfähige Platte (z.B. Aluminium) an die planparallelen Außenflächen der PCR-Kammer angedrückt werden. Die jeweiligen Gegenseiten der Peltierelemente sind mit Körpern kontaktiert, die über eine möglichst große Oberfläche, gegebenenfalls unter Zuhilfenahme von Ventilatoren, einen Wärmeübergang zur Umgebungsluft ermöglichen (Kühler).

Derartig angeordnete PCR-Heizplatten erlauben keine weitere direkte Kombination mit starkem Magnetfeld (z.B. Permanentmagnet, Elektromagnet) zur Isolierung der Magnet-Beads in der Mitte des Aufbaus.

Eine derartig angeordnete PCR-Kammer, die von relativ voluminösen Komponenten umschlossen ist, kann nicht direkt mit einem Elektromagneten oder Permanentmagneten zur Isolierung der Magnet-Beads kombiniert werden.

Um dennoch einen hohen Feldgradienten in der PCR-Kammer entlang der Durchflussrichtung der die Magnet-Beads enthaltenden Flüssigkeit zu erzielen, werden die wärmeleitfähigen aber magnetisch neutralen Platten zum Wärmeübergang von den Peltierelementen auf die PCR-Kammer das PCR-Gehäuse mit kleinvolumigen Körpern (ca. 5mm³) aus einem Material mit hoher Permeabilitätszahl µ(r), bei gleichzeitig noch guter Wärmeleitfähigkeit, vorzugsweise Permalloy (Ni-Fe) oder Mumetall (Ni/Fe/Cu/Mo), ausgestattet.

Diese kleinvolumige Körper bilden jeweils einen Magnetkern direkt an der Oberflächen der PCR-Kammer und werden in die Heizplatten eingebaut. Zwischen den Magnetkernen befindet sich nun direkt die PCR Kammer. Solche Magnetkerne kann man mit einem von außen angebrachten Magnetfeld magnetisieren. Erfindungsgemäß befinden sich z.B. Permanentmagnete an den Außenseiten von Peltierelementen, dessen Magnetfeldlinien über die Magnetkerne gebündelt werden und damit einen hohen Feldgradienten erzeugen, mit einem sich in Fließrichtung verdichtenden Magnetfeld, wie z.B. in Fig. 1 dargestellt ist.

In dem Feldgradienten, der erfindungsgemäß parallel zu den Außenwänden der PCR-Kammer und Fließrichtung der Magnet-Beads enthaltenen Lösung angeordnet ist werden die Magnet-Beads hineingezogen, festgehalten und somit aufkonzentriert.

In Kombination mit einem "großvolumigen Magnetfeld", das senkrecht zu den parallelen Außenwänden der PCR-Kammer angeordnet ist, kann innerhalb der PCR-Kammer ein großer Feldgradient entlang der Fließrichtung der die Magnet-Beads enthaltenden Lösung erzielt werden, indem die "großvolumigen" Feldlinien mit Hilfe der Mumetall-Körper in der PCR-Kammer gebündelt werden.

In Figur 2 sind die konkreten Mittel zur Realisierung des in Figur 1 schematisch dargestellten Verfahrens angegeben. Es bedeuten wiederum 1 ein Durchflusskanal mit einem Flüssigkeitsfluss 2. In der Flüssigkeit befinden sich einzelne Magnet-Beads zur Ankopplung an DNA, die mit 13 bezeichnet sind. Die Magnet-Beads 13 sollen in einem eng lokalisierten Bereich der Probenkammer konzentriert werden.

Die Anordnung gemäß Figur 2 besteht im Wesentlichen aus schichtweise angeordneten Einheiten beiderseits des Durchflusskanals, die einerseits die Fokussierung des Magnetfeldes und andererseits den Wärmeübergang ermöglichen: Es bedeuten 14, 14' zwei Wärmeankopplungsplatten, in die gegenüberliegend zentrisch je ein Mumetallkörper 15, 15' eingelassen ist. Über den Wärmeankopplungsplatten 14, 14' befinden sich Einrichtungen 16, 16' mit Peltier-Elementen und darüber Permanentmagnete 18, 18'. Statt der Permanentmagnete können auch Elektromagnete verwendet werden

In der Figur 2 ist gleichermaßen der magnetische Feldlinienverlauf eingetragen. Es ergibt sich, dass ausgehend von gleichpolig angeordneten Permanentmagneten 18, 18' ein Feldverlauf realisiert wird, der sich in den Mumetallkörpern 15, 15' konzentriert. Entsprechend werden in diesem Bereich die Magnet-Beads 13 aufkonzentriert.

Mit der dargestellten Einrichtung ist es also in überraschend einfacher Weise möglich, einerseits von einem vergleichsweise weit entfernten Magnetfelderzeuger an einem lokalisierten Ort ein konzentriertes Magnetfeld zu erzeugen und andererseits diesen Ort mit den umliegenden Bereichen entsprechend zu thermostatisieren bzw. thermozyklisieren, wie es insbesondere zur Durchführung einer PCR notwendig ist. Insbesondere für letzteren Zweck dient die Kombination von Peltierelementen und jeweils zugehörigem Kühlkörper.

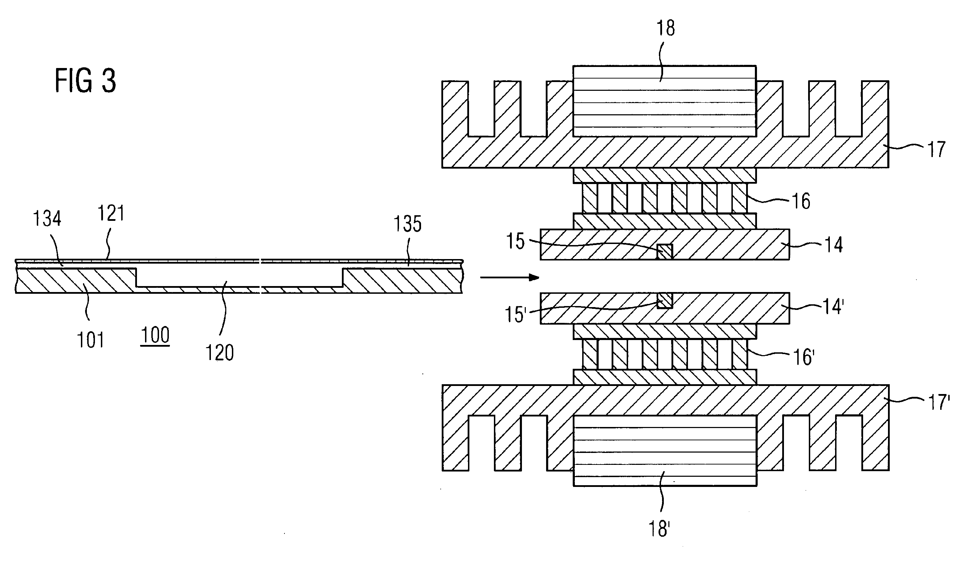

In Figur 3 ist eine Anordnung gemäß Figur 2 mit einem Freiraum dargestellt, in der sich zunächst keine Cartridge befindet. Außerhalb der Anordnung ist eine Cartridge 100 angedeutet, die in den Freiraum der Anordnung gemäß Figur 3 einschiebbar ist und in der die gewünschten Maßnahmen durchgeführt werden können. Die Cartridge 100 besteht dabei aus einem planaren Kunststoffkörper 101 und einer Klebefolie 121 als Abdeckung. Mit dieser Anordnung wird eine Probenkammer 120 gebildet, die einen Zufluss 134 und einen Abfluss 135 aufweist.

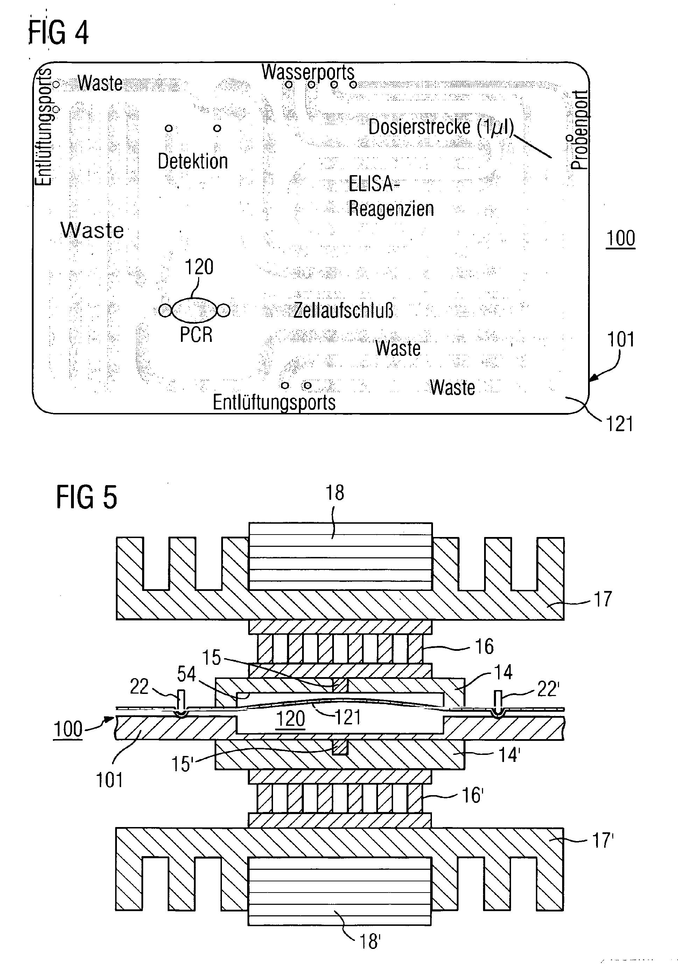

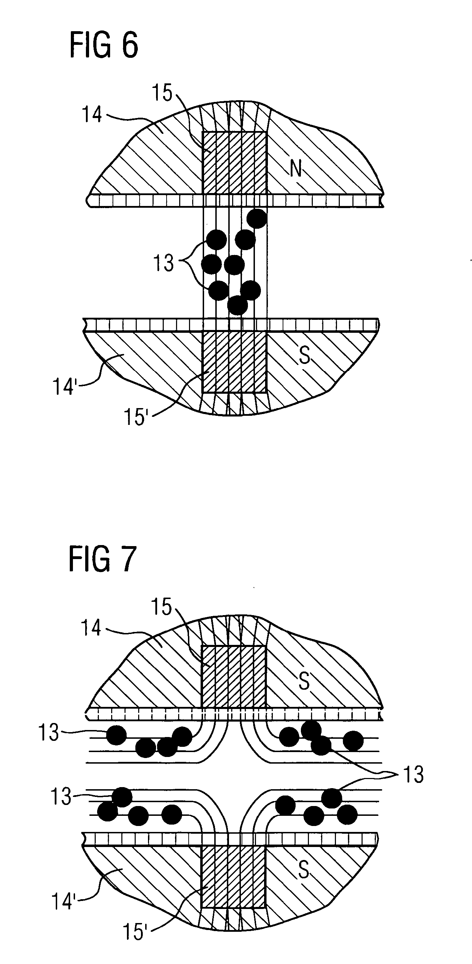

In Figur 4 ist die Draufsicht auf eine Cartridge 100 gezeigt, wie sie im Wesentlichen in der eingangs genanten Anmeldung beschrieben ist. Wenn die Cartridge 100 in den Freiraum der Anordnung gemäß Figur 3 eingeschoben wird, ist die PCR-Kammer 120, d.h. die Probenkammer, zwischen den Wärmeankopplungsplatten 14, 14' mit den Mumetallkörpern 15, 15' lokalisiert.

In einer besonderen einem besonderen Ausführungsform der Erfindung wird während des Thermozyklisierungsvorgangs die PCR-Kammer (Probenkammer) z.B. im Zufluss- und Abflusskanal durch Ventile 22, 22' verschlossen. Die Ventile 22, 22' liefern einen konstanten Anpressdruck insbesondere gegen die Folie der Cartridge. Zur Realisierung solcher Ventile können beispielsweise die Eigenschaften von Memory-Metallen genutzt werden, wie sie in einer Anmeldung der Anmelderin mit gleicher Priorität beschrieben sind.

Auf Grund der hohen Temperaturänderungen während der Thermozyklisierung kann durch Ausgasen gelöster Luft und durch die Wärmeausdehnung des Wassers der Druck in der PCR-Kammer ansteigen. In Figur 5 ist die Anordnung gemäß Figur 3 insoweit abgeändert, dass die obere Wärmeankopplungsplatte 14 der Figur 2 eine Aussparung 54 hat. Mit Hilfe der Aussparung 54 ergibt sich die Möglichkeit dass die Abdeckfolie 32 sich in die Aussparung 54 wölben kann und somit ein Druckausgleich stattfindet.

## Patentansprüche

1. Verfahren zur Isolierung von Magnet-Beads aus einer flüssigen Probe und anschließender Thermocyclierung für eine PCR (Polymerase Chain Reaction), bei dem die Flüssigkeitsprobe in einem Durchflusskanal zur Probenkammer strömt und dort die Magnet-Beads durch ein Magnetfeld, das einen Feldgradienten, der parallel zu den Außenwänden der PCR-Kammer angeordnet ist, in Fließrichtung aufweist, isoliert und in der Probenkammer der Thermocyclierung entsprechend vorgegebenem Programm unterzogen werden, wobei der Magnetfeldgradient entlang der Fließrichtung aufgebaut und dass gleichermaßen senkrecht zur Fließrichtung ein Wärmetransfer realisiert wird, **dadurch gekennzeichnet, dass** sich das Magnetfeld in Fließrichtung verdichtet.

2. Verfahren nach Anspruch 1, **dadurch gekennzeichnet, dass** das Magnetfeld in einem eng lokalisierten Bereich der Probenkammer fokussiert wird.

3. Verfahren nach Anspruch 1, **dadurch gekennzeichnet, dass** der Wärmetransfer im Bereich der Probenkammer erfolgt.

4. Verfahren nach Anspruch 1, **dadurch gekennzeichnet, dass** der Wärmeübergang senkrecht zur Fließrichtung durch eine "Sandwich"-Thermostatier-Anordnung mit Heiz-/Kühlelementen realisiert wird.

5. Anordnung zur Durchführung des Verfahrens nach Anspruch 1 oder einem der Ansprüche 2 bis 4, bei der ein Fließkanal (1) in eine Probenkammer (13) mündet, **dadurch gekennzeichnet, dass** Mittel vorhanden sind, um in der Probenkammer (13) einen Magnetfeldgradienten parallel zu den Außenwänden der Probenkammer (3) zu erzeugen und eine Thermostatisierung der Probenkammer (13) zu ermöglichen, wobei der Magnetfeldgradient entlang einer Fließrichtung aufbaubar und dass gleichermaßen senkrecht zur Fließrichtung ein Wärmetransfer realisierbar ist, und das Magnetfeld in Fließrichtung verdichtet ist.

6. Anordnung nach Anspruch 5, **dadurch gekennzeichnet, dass** die Mittel zur Erzeugung des Magnetfeldes einen Permanentmagneten (18, 18') oder einen Elektromagneten beinhalten, dessen Magnetfeld über kleinvolumige Körper (15, 15') aus einem Material mit hoher Permeabilitätszahl bei gleichzeitig guter Wärmeleitfähigkeit in die Probenkammer (33) eingekoppelt wird.

7. Anordnung nach Anspruch 6, **dadurch gekennzeichnet, dass** das Material mit hoher Permeabilitätszahl Permalloy(Ni-Fe)-Metall ist.

8. Anordnung nach Anspruch 6, **dadurch gekennzeichnet, dass** das Material mit hoher Permeabilitätszahl Mumetall (Ni/Fe/Cu/Mo) ist.

9. Anordnung nach Anspruch 6 und Anspruch 8, **dadurch gekennzeichnet, dass** die kleinvolumigen Körper (15, 15') aus Material mit hoher Permeabilitätszahl in die Heiz-/Kühl-Platten (14, 14') beiderseits der Probenkammer (33) eingebaut sind.

10. Anordnung nach Anspruch 5, **dadurch gekennzeichnet, dass** zur Thermocyclierung Wärmeankopplungsplatten (14, 14') und Heiz-/Kühlelemente (16, 16') beiderseits der Probenkammer (33) schichtweise angeordnet sind.

11. Anordnung nach Anspruch 10, **dadurch gekennzeichnet, dass** die Heiz-/Kühlelemente Peltierelemente (16, 16') sind.

12. Anordnung nach einem der Ansprüche 5 bis 10, **dadurch gekennzeichnet, dass** neben den Peltierelementen (16, 16') weitere Einrichtungen (17, 17') zum Wärmeausgleich der Peltierelemente mit der Umgebung vorhanden sind.

13. Anordnung nach Anspruch 12, **dadurch gekennzeichnet, dass** die weiteren Einrichtungen Kühlrippen (17, 17') sind, die gegebenen falls mit einem Ventilator kombiniert sind.

14. Anordnung nach einem der Ansprüche 5 bis 13, dass in einer der Wärmeankopplungsplatten (14, 14') eine Aussparung (54) vorhanden ist.

## Claims

1. Method for the isolation of magnetic beads from a liquid sample and subsequent thermocycling for a PCR (polymerase chain reaction), in which the liquid sample flows in a flow channel to the sample chamber and the magnetic beads are isolated there by a magnetic field which has a field gradient, which is arranged parallel to the outer walls of the PCR chamber, in the direction of flow and subjected in the sample chamber to thermocycling in accordance with a prescribed program, wherein the magnetic field gradient is built up along the direction of flow and equally a heat transfer is realized perpendicular to the direction of flow, **characterized in that** the magnetic field is compressed in the direction of flow.

2. Method according to Claim 1, **characterized in that** the magnetic field is focused in a highly localized area of the sample chamber.

3. Method according to Claim 1, **characterized in that** the heat transfer takes place in the area of the sample chamber.

4. Method according to Claim 1, **characterized in that** the heat transmission perpendicular to the direction of flow is realized by a "sandwich" thermostating arrangement with heating/cooling elements.

5. Arrangement for carrying out the method according to Claim 1 or one of Claims 2 to 4, in which a flow channel (1) opens out into a sample chamber (13), **characterized in that** there are means for generating a magnetic field gradient parallel to the outer walls of the sample chamber (3) in the sample chamber (13) and for permitting thermostatic control of the sample chamber (13), wherein the magnetic field gradient can be built up along a direction of flow and equally a heat transfer can be realized perpendicular to the direction of flow, and the magnetic field is compressed in the direction of flow.

6. Arrangement according to Claim 5, **characterized in that** the means for generating the magnetic field comprise a permanent magnet (18, 18') or an electromagnet, the magnetic field of which is fed into the sample chamber (33) by means of small-volume bodies (15, 15') of a material with high relative permeability and at the same time good thermal conductivity.

7. Arrangement according to Claim 6, **characterized in that** the material with high relative permeability is a permalloy (Ni-Fe) metal.

8. Arrangement according to Claim 6, **characterized in that** the material with high relative permeability is mu-metal (Ni/Fe/Cu/Mo).

9. Arrangement according to Claim 6 and Claim 8, **characterized in that** the small-volume bodies (15, 15') of material with high relative permeability are incorporated in the heating/cooling plates (14, 14') on both sides of the sample chamber (33).

10. Arrangement according to Claim 5, **characterized in that** heat coupling plates (14, 14') and heating/cooling elements (16, 16') are arranged in layers on both sides of the sample chamber (33) for the thermocycling.

11. Arrangement according to Claim 10, **characterized in that** the heating/cooling elements are Peltier elements (16, 16').

12. Arrangement according to one of Claims 5 to 10, **characterized in that**, apart from the Peltier elements (16, 16'), there are further devices (17, 17') for the thermal equalization of the Peltier elements with the surroundings.

13. Arrangement according to Claim 12, **characterized in that** the further devices are cooling ribs (17, 17'), which are possibly combined with a fan.

14. Arrangement according to one of Claims 5 to 13, **characterized in that** there is a clearance (54) in one of the heat coupling plates (14, 14').

## Revendications

1. Procédé d'isolement de perles magnétiques dans un échantillon liquide et ensuite de thermocyclisation pour une PCR (réaction en chaîne de la polymérase), dans lequel l'échantillon liquide s'écoule dans un canal de passage vers la chambre à échantillon, et là les perles magnétiques sont isolées par un champ magnétique, qui a, dans la direction d'écoulement, un gradient de champ, qui est parallèle aux parois extérieures de la chambre PCR, et sont soumises, dans la chambre à échantillon, à la thermocyclisation conformément à un programme prescrit, le gradient du champ magnétique étant constitué le long de la direction d'écoulement, et en ce qu'on réalise pareillement, perpendiculairement à la direction d'écoulement, un transfert de chaleur, **caractérisé en ce que** le champ magnétique se condense dans la direction d'écoulement.

2. Procédé suivant la revendication 1, **caractérisé en ce qu'**on focalise le champ magnétique dans une partie étroitement localisée de la chambre à échantillon.

3. Procédé suivant la revendication 1, **caractérisé en ce qu'**on effectue le transfert de chaleur dans la zone de la chambre à échantillon.

4. Procédé suivant la revendication 1, **caractérisé en ce qu'**on réalise le transfert de chaleur perpendiculairement à la direction d'écoulement par un agencement "sandwich" thermostaté ayant des éléments de chauffage/refroidissement.

5. Agencement pour effectuer le procédé suivant la revendication 1 ou l'une des revendications 2 à 4, dans lequel le canal ( 1 ) d'écoulement débouche dans une chambre ( 13 ) à échantillon, **caractérisé en ce qu'**il y a des moyens pour produire, parallèlement aux parois extérieures de la chambre à échantillon, un gradient ( 3 ) de champ magnétique dans la chambre ( 3 ) à échantillon et pour rendre possible une thermostatisation de la chambre ( 13 ) à échantillon, le gradient de champ magnétique pouvant être formé le long d'une direction d'écoulement, et **en ce que** pareillement un transfert de chaleur peut être réalisé perpendiculairement à la direction d'écoulement et **en ce que** le champ magnétique se condense dans la direction d'écoulement.

6. Agencement suivant la revendication 5, **caractérisé en ce que** les moyens de production du champ magnétique comportent un aimant ( 18, 18' ) permanent ou un électroaimant, dont le champ magnétique est injecté dans la chambre ( 33 ) à échantillon par une pièce ( 15, 15' ) de volume petit, en un matériau ayant un grand indice de perméabilité, tout en ayant une bonne conductibilité de la chaleur.

7. Agencement suivant la revendication 6, **caractérisé en ce que** le matériau ayant un grand indice de perméabilité est un métal en permalloy ( Ni-Fe ).

8. Agencement suivant la revendication 6, **caractérisé en ce que** le matériau ayant un grand indice de perméabilité est du métal mu ( Ni/Fe/Cu/Mo ).

9. Agencement suivant la revendication 6 et la revendication 7, **caractérisé en ce que** la pièce ( 15, 15' ) de volume petit, en un matériau ayant un grand indice de perméabilité est insérée dans les plaques ( 14, 14' ) de chauffage/refroidissement de part et d'autre de la chambre ( 33 ) à échantillon.

10. Agencement suivant la revendication 5, **caractérisé en ce que**, pour la thermocyclisation, des plaques ( 14, 14' ) de couplage de la chaleur et des éléments ( 16, 16' ) de chauffage/ refroidissement sont disposés couche par couche de part et d'autre de la chambre ( 33 ) à échantillon.

11. Agencement suivant la revendication 10, **caractérisé en ce que** les éléments de chauffage/refroidissement sont des éléments ( 16, 16' ) à effet Peltier.

12. Agencement suivant l'une des revendications 5 à 10, **caractérisé en ce que**, à côté des éléments ( 16, 16' ) à effet Peltier, il y a d'autres dispositifs ( 17, 17' ) de compensation de la chaleur des éléments à effet Peltier avec l'atmosphère ambiante.

13. Agencement suivant la revendication 12, **caractérisé en ce que** les autres dispositifs sont des ailettes ( 17, 17' ) de refroidissement, qui sont combinées, le cas échéant, à un ventilateur.

14. Agencement suivant l'une des revendications 5 à 13, dans lequel il y a un évidement ( 54 ) dans l'une des plaques ( 14, 14' ) de couplage de la chaleur.
